# EUROPÄISCHE PATENTSCHRIFT

(11) **EP 2 097 657 B1**
(45) Veröffentlichungstag und Bekanntmachung des Hinweises auf die Patenterteilung: **01.05.2013**
(21) Anmeldenummer: 07846988.9
(22) Anmeldetag: 05.12.2007
(51) Int. Cl.: F16F 15/124, F16F 15/123, F16F 15/134, F16F 15/136, F16F 15/131

(54) **TORSIONSSCHWINGUNGSDÄMPFER MIT MEHRTEILIGEM PRIMÄRELEMENT**
TORSIONAL VIBRATION DAMPER COMPRISING A SECTIONAL PRIMARY ELEMENT
AMORTISSEUR DES VIBRATIONS TORSIONNELLES PRÉSENTANT UN ÉLÉMENT PRIMAIRE MULTICOMPOSANT

(30) Priorität: 18.12.2006 DE 102006060201; 23.02.2007 DE 102007008834
(43) Veröffentlichungstag der Anmeldung: 09.09.2009
(73) Patentinhaber: BorgWarner Inc., Auburn Hills, MI 48326 (US)
(72) Erfinder: BÖLLING, Jochen, 76534 Baden-Baden (DE); HALM, Christian Bernhard, 69190 Walldorf (DE); GÜNTER, Frank, 76228 Karlsruhe (DE); HEINZ, Volker, 67354 Römerberg (DE)
(74) Vertreter: Leckel, Ulf
(86) Internationale Anmeldenummer: PCT/EP2007/010544
(87) Internationale Veröffentlichungsnummer: WO 2008/074399

(56) Entgegenhaltungen:
- EP-A- 0 463 941
- EP-A- 1 574 744
- EP-A- 1 584 838
- WO-A-96/10138
- FR-A- 2 812 701
- FR-A- 2 821 404
- FR-A- 2 849 683
- FR-A- 2 880 398
- US-A- 4 194 373

## Beschreibung

Die vorliegende Erfindung betrifft einen Torsionsschwingungsdämpfer mit einem antriebsseitigen Primärelement mit mindestens einem Primärmitnehmer, einem abtriebsseitigen Sekundärelement mit mindestens einem Sekundärmitnehmer und mindestens einer Federeinrichtung zwischen dem Primärmitnehmer und dem Sekundärmitnehmer zur federelastischen Kopplung von Primärelement und Sekundärelement.

Aus dem Stand der Technik sind eine Vielzahl von Torsionsschwingungsdämpfern bzw. Drehschwingungsdämpfern in verschiedenen Anwendungsgebieten bekannt. Die bekannten Torsionsschwingungsdämpfer werden insbesondere im Kraftfahrzeugbau zur elastischen Kopplung von Verbrennungskraftmaschine und Antriebsstrang eingesetzt. Auf diese Weise soll verhindert werden, dass Torsionsschwingungen von der Verbrennungskraftmaschine auf den Antriebsstrang bzw. das Getriebe übertragen werden. Eine solche Übertragung von Torsionsschwingungen ist insbesondere bei Verbrennungskraftmaschinen mit vergleichsweise wenig Zylindern und bei niedrigen Drehzahlen gegeben. Bei effektiver Dämpfung derartiger Schwingungen kann die Verbrennungskraftmaschine mit niedrigeren Drehzahlen betrieben werden, was im Allgemeinen einen verringerten Kraftstoffverbrauch zur Folge hat.

So beschreibt die EP 1584838 A1 einen Torsionsschwingungsdämpfer mit einem antriebsseitigen Primärelement und einem abtriebsseitigen Sekundärelement, wobei das Primärelement über eine Federeinrichtung federelastisch mit dem Sekundärelement gekoppelt ist, so dass diese um eine Neutralposition gegeneinander verdreht werden können. Primär- und Sekundärelement umfassen jeweils an die Federeinrichtung angrenzende Mitnehmer, die nachstehend als Primär- bzw. Sekundärmitnehmer bezeichnet werden. Ein antriebsseitig an dem Primärelement anliegendes Drehmoment kann somit mittels des Primärmitnehmers zunächst auf die Federeinrichtung und von der Federeinrichtung über den Sekundärmitnehmer auf das Sekundärelement übertragen werden. Das antriebsseitige Primärelement ist als einstückige Mittelscheibe mit radial nach außen hervorstehenden Primärmitnehmern ausgebildet.

Die DE 199 58 814 A1 beschreibt einen ähnlichen Drehschwingungsdämpfer in Form eines Zweimassenschwungrades. Der bekannte Drehschwingungsdämpfer weist ein Zentralscheibenelement mit mehreren am Umfang angeordneten Abstützarmen und ein weiteres Scheibenelement auf, das sich aus zwei Deckscheibenelementen zusammensetzt, an denen Abstützvorsprünge vorgesehen sind. Zwischen den Abstützarmen und den Abstützvorsprüngen sind Federeinrichtungen zur federelastischen Kopplung von Zentralscheibenelement und dem weiteren Scheibenelement vorgesehen. Das Zentralscheibenelement ist auch hier einstückig ausgebildet.

Die aus dem Stand der Technik bekannten Torsions- oder Drehschwingungsdämpfer haben den Nachteil, dass insbesondere bei einem Zug-/Schubwechsel starke Übergabegeräusche entstehen können. Dies ist darauf zurückzuführen, dass die Primärmitnehmer bzw. Abstützarme bei einem Zug-/Schubwechsel kurzzeitig von der Federeinrichtung abheben können, um anschließend wieder auf einer Endfeder oder einem Endschuh der Federeinrichtung aufzutreffen. Dies kann so weit führen, dass die Schwingung des Primärelementes bzw. Zentralscheibenelementes über dessen Antriebswelle auf den Motor übertragen wird, woraus eine besonders starke Geräuschentwicklung resultiert.

Die EP 1 574 744 A1 beschreibt ein Zweimassenschwungrad, dessen Primärschwungmasse in ein Innenelement und ein Außenelement unterteilt ist, wobei zwischen den genannten Elementen eine Trennstelle vorgesehen ist, in der ein Zwischenelement angeordnet ist. Sowohl die Außenkontur des Innenelements als auch die Innenkontur des Außenelements ist polygonartig ausgebildet. Der bekannte Aufbau soll der Dämpfung von Axial- und Taumelschwingungen dienen, hat jedoch den Nachteil, dass das Zweimassenschwungrad nicht dauerhaft geräuscharm betrieben werden kann.

Es ist daher eine Aufgabe der vorliegenden Erfindung, einen Torsionsschwingungsdämpfer zu schaffen, der dauerhaft geräuscharm betrieben werden kann.

Diese Aufgabe wird durch die in Patentanspruch 1 angegebenen Merkmale gelöst. Vorteilhafte Ausführungsformen der Erfindung sind Gegenstand der Unteransprüche.

Der erfindungsgemäße Torsionsschwingungsdämpfer weist ein antriebsseitiges Primärelement mit mindestens einem Primärmitnehmer, ein abtriebsseitiges Sekundärelement mit mindestens einem Sekundärmitnehmer und mindestens eine Federeinrichtung zwischen dem Primärmitnehmer und dem Sekundärmitnehmer zur federelastischen Kopplung von Primärelement und Sekundärelement auf. So kann das Primärelement beispielsweise mit der Motorausgangswelle und das Sekundärelement mit der Getriebeeingangswelle verbunden werden. Die Federeinrichtung kann beispielsweise aus einer Vielzahl von in Umfangsrichtung hintereinander angeordneten Federelementen oder Federsätzen bestehen. Erfindungsgemäß umfasst das Primärelement ein Innenteil und ein Außenteil. An dem Außenteil ist der Primärmitnehmer angeordnet. Ferner ist mindestens ein Dämpfungsteil zur Schwingungsdämpfung zwischen dem Innenteil und dem Außenteil vorgesehen. Das Innenteil ist mit einer Außenverzahnung versehen, während das Außenteil mit einer Innenverzahnung versehen ist. Dabei greift die Außenverzahnung in die Innenverzahnung ein. Hierbei ist jedwede Verzahnungsform verwendbar, solange dadurch eine formschlüssige Drehmomentübertragung gewährleistet ist. Das mindestens eine Dämpfungsteil ist zwischen der Innen- und der Außenverzahnung angeordnet.

Durch die Anordnung des Dämpfungselementes zwischen dem Außenteil und dem Innenteil werden Anregungen oder Stöße, die aufgrund von Zug-/Schubwechseln auf den Primärmitnehmer einwirken und zu Schwingungen des Außenteils führen, wirksam gedämpft werden. Ein Übertragung der Schwingungen auf das Innenteil und somit auf die Motorausgangswelle und den Motor findet nicht bzw. nur in geringem Maße statt. Auf diese Weise kann die Geräuschentwicklung insbesondere bei Zug-/Schubwechseln wirksam reduziert werden. Dabei gewährleistet die in die Innenverzahnung eingreifende Außenverzahnung trotz des Dämpfungsteils eine sichere Übertragung des Drehmoments von dem Innenteil auf das Außenteil. Indem das mindestens eine Dämpfungsteil zwischen der Innen- und Außenverzahnung angeordnet ist, wird einerseits ein besonders Platz sparendes Dämpfungsteil geschaffen, das die axiale Baulänge des Primärelements bzw. Sekundärelements und somit des Torsionsschwingungsdämpfers nicht oder kaum beeinflusst. Andererseits ermöglicht ein Dämpfungsteil, das zwischen dieser Innen- und Außenverzahnung angeordnet ist, einen dauerhaft geräuscharmen Betrieb des Torsionsschwingungsdämpfers.

In einer bevorzugten Ausführungsform des erfindungsgemäßen Torsionsschwingungsdämpfers weist auch das Sekundärelement ein Innenteil und ein Außenteil, an dem der Sekundärmitnehmer angeordnet ist, auf. Auch hier ist mindestens ein Dämpfungsteil zur Schwingungsdämpfung zwischen dem Innenteil und dem Außenteil vorgesehen. Bezüglich der Vorteile dieser Ausführungsform sei auf die vorangehend beschriebenen Vorteile verwiesen, wobei hier eine Übertragung der Schwingungen ausgehend von den Sekundärmitnehmern über das Sekundärelement auf eine Getriebeeingangswelle o. ä. sicher verhindert bzw. eingeschränkt werden kann.

In einer weiteren bevorzugten Ausführungsform des erfindungsgemäßen Torsionsschwingungsdämpfers ist das Innenteil über das Dämpfungsteil drehelastisch mit dem Außenteil gekoppelt. Auf diese Weise kann das Dämpfungsteil neben der Federeinrichtung dazu beitragen, die von dem Motor ausgehenden Drehstöße bzw. Torsionsschwingungen zu eliminieren, wodurch ein besonders effektiver Torsionsschwingungsdämpfer geschaffen ist.

In einer besonders bevorzugten Ausführungsform des erfindungsgemäßen Torsionsschwingungsdämpfers ist das mindestens eine Dämpfungsteil elastisch verformbar und besteht vorzugsweise aus einem Elastomer. So kann es sich bei dem Dämpfungsteil beispielsweise um ein Gummiteil handeln, das die Schwingungen und Drehstöße elastisch abfängt.

In einer vorteilhaften Ausführungsform des erfindungsgemäßen Torsionsschwingungsdämpfers ist das Dämpfungsteil in Umfangsrichtung durchgehend zwischen der Innen- und der Außenverzahnung angeordnet, um ein besonders stabiles Dämpfungselement und somit eine sichere Schwingungsdämpfung zu erzielen.

Um den Materialeinsatz jedoch gering zu halten und dennoch eine sichere Schwingungsdämpfung zu gewährleisten, sind bei einer besonders vorteilhaften Ausführungsform des erfindungsgemäßen Torsionsschwingungsdämpfers mehrere, voneinander beabstandete Dämpfungsteile vorgesehen. Bei entsprechend stabiler Ausführung der vereinzelten Dämpfungsteile kann hierdurch annähernd die selbe Funktionssicherheit wie mit einem einzelnen in Umfangsrichtung durchgehenden Dämpfungsteil erzielt werden.

Gemäß einer weiteren bevorzugten Ausführungsform des erfindungsgemäßen Torsionsschwingungsdämpfers sind die Dämpfungsteile als rohrförmige Hülsen ausgebildet, deren Längsachsen sich quer zur Umfangsrichtung erstrecken. Derartige Hülsen sind besonders einfach herstellbar und können darüber hinaus einfach montiert bzw. eingesetzt werden. Die Hülsen können beispielsweise aus einem Elastomer, aus Metall o. ä. bestehen.

In einer weiteren vorteilhaften Ausführungsform des erfindungsgemäßen Torsionsschwingungsdämpfers erstrecken sich die Längsachsen der rohrförmigen Hülsen parallel zur Drehachse des Torsionsschwingungsdämpfers. Auf diese Weise sind das Verhalten und die Eigenschaften der eingesetzten rohrförmigen Hülsen im Betrieb, also beispielsweise deren Elastizität und Festigkeit, besser vorhersagbar.

Um den rohrförmigen Hülsen eine besonders große Elastizität in einem vorgegebenen Bereich verleihen zu können, weisen die rohrförmigen Hülsen in einer weiteren vorteilhaften Ausführungsform des erfindungsgemäßen Torsionsschwingungsdämpfers einen Längsschlitz auf.

In einer besonders bevorzugten Ausführungsform des erfindungsgemäßen Torsionsschwingungsdämpfers sind die rohrförmigen Hülsen endseitig mit Anschlägen, vorzugsweise Bördelungen, zur axialen Fixierung von Innen- und Außenteil zueinander versehen. Bei entsprechend stabiler Ausführung der Anschläge sind keine oder nur geringfügige Maßnahmen zur weiteren Fixierung von Innen- und Außenteil in axialer Richtung zueinander notwendig. Darüber hinaus könnten die Anschläge der Vorfixierung im Montageprozess dienen.

In einer weiteren vorteilhaften Ausführungsform des erfindungsgemäßen Torsionsschwingungsdämpfers sind mindestens eine, vorzugsweise zwei seitlich zur Innen- und Außenverzahnung angeordnete Halteteile zur axialen Fixierung von Innen- und Außenteil zueinander vorgesehen. Derartige Halteteile könnten beispielsweise zusammen mit den oben genannten Anschlägen der Dämpfungsteile der axialen Fixierung dienen.

In einer weiteren vorteilhaften Ausführungsform des erfindungsgemäßen Torsionsschwingungsdämpfers sind die seitlichen Halteteile ringscheibenförmig, vorzugsweise als ringscheibenförmige Haltebleche ausgebildet.

In einer besonders bevorzugten Ausführungsform des erfindungsgemäßen Torsionsschwingungsdämpfers sind die seitlichen Halteteile an dem Innen- oder Außenteil oder an den Dämpfungsteilen befestigt sind. Im letztgenannten Fall könnte das seitliche Halteteil beispielsweise den Anschlag eines jeden Dämpfungsteils bilden.

In einer weiteren bevorzugten Ausführungsform des erfindungsgemäßen Torsionsschwingungsdämpfers sind die Dämpfungsteile - vorzugsweise ausschließlich - zwischen den einander zugeordneten Zahnflanken der Innen- und Außenverzahnung vorgesehen. Da die Drehung in erster Linie über die Zahnflanken der Innen- und Außenverzahnung übertragen wird, kann hierdurch zum einen eine besonders effektive Dämpfung von Drehstößen und zum anderen eine sichere Schwingungsdämpfung erreicht werden.

In einer weiteren besonders bevorzugten Ausführungsform des erfindungsgemäßen Torsionsschwingungsdämpfers sind in den Zahnflanken Vertiefungen vorgesehen, in denen das Dämpfungsteil teilweise einliegt. So kann das Dämpfungsteil einerseits sicher zwischen Innen- und Außenverzahnung positioniert werden. Andererseits wird das Dämpfungsteil nicht zerquetscht, wenn besonders große Drehmomentstöße übertragen werden, da das zusammengedrückte Dämpfungsteil innerhalb der Vertiefung vor einem weiteren Zusammendrücken geschützt ist.

In einer vorteilhaften Ausführungsform des erfindungsgemäßen Torsionsschwingungsdämpfers sind die Innen- und Außenverzahnung derart ausgebildet, dass das Außenteil von einer Neutralposition, in der die Zahnflanken der Innen- und Außenverzahnung nicht unmittelbar aneinander angrenzen, in eine Umfangsrichtung relativ zu dem Innenteil und unter elastischer Verformung der Dämpfungsteile in eine Anschlagposition gedreht werden kann, in der mindestens eine Zahnflanke der Innenverzahnung unmittelbar an eine Zahnflanke der Außenverzahnung angrenzt. Dies kann beispielsweise durch die zuvor genannten Vertiefungen erreicht werden, die sich nur über einen Abschnitt der Zahnflanke erstrecken, wobei der Rest der Zahnflanke an die gegenüberliegende angrenzen kann, wenn das zusammengedrückte Dämpfungsteil vollständig in die Vertiefung gedrückt ist.

Gemäß einer weiteren vorteilhaften Ausführungsform des erfindungsgemäßen Torsionsschwingungsdämpfers sind die Dämpfungsteile in der Neutralposition unter Vorspannung zwischen den einander zugeordneten Zahnflanken der Innen- und Außenverzahnung angeordnet.

Gemäß einer weiteren vorteilhaften Ausführungsform des erfindungsgemäßen Torsionsschwingungsdämpfers kann das Außenteil um einen vorbestimmten Auslenkwinkel von der Neutralposition in die Anschlagposition gedreht werden, wobei der vorbestimmte Auslenkwinkel kleiner als ein vorbestimmter Auslenkwinkel zwischen dem Primärelement und dem Sekundärelement ist. Hierdurch ist sichergestellt, dass die Torsionsschwingungen mit großer Amplitude in erster Linie durch die Federeinrichtung des Torsionsschwingungsdämpfers gedämpft werden.

Die Erfindung wird im Folgenden anhand beispielhafter Ausführungsformen unter Bezugnahme auf die beigefügten Zeichnungen näher erläutert. Es zeigen:
Fig. 1 eine perspektivische Explosionsdarstellung einer Ausführungsform des erfindungsgemäßen Torsionsschwingungsdämpfers,
Fig. 2 eine perspektivische Darstellung einer ersten Ausführungsform des Primärelementes aus Fig. 1 in einer perspektivischen Vorderansicht,
Fig. 3 das Primärelement aus Fig. 2 in einer perspektivischen Rückansicht,
Fig. 4 das Primärelement aus Fig. 2 mit seitlichen Halteteilen in einer perspektivischen Vorderansicht,
Fig. 5 das Primärelement aus Fig. 4 in einer perspektivischen Rückansicht,
Fig. 6 das Primärelement aus den Fig. 1 bis 5 ohne seitliche Halteteile in einer Vorderansicht,
Fig. 7a eine Vorderansicht einer zweiten Ausführungsform des Primärelementes aus Fig. 1,
Fig. 7b den Ausschnitt A von Fig. 7a in vergrößerter Darstellung,
Fig. 7c eine Schnittansicht entlang der Schnittlinie B-B von Fig. 7b,
Fig. 8 eine Vorderansicht einer dritten Ausführungsform des Primärelementes aus Fig. 1,
Fig. 9a eine Vorderansicht einer vierten Ausführungsform des Primärelementes aus Fig. 1,
Fig. 9b den Ausschnitt C von Fig. 9a in vergrößerter Darstellung mit dem Außenteil in der Neutralposition,
Fig. 9c den Ausschnitt C von Fig. 9a in vergrößerter Darstellung mit dem Außenteil in der Anschlagposition,
Fig. 10a eine Vorderansicht einer fünften Ausführungsform des Primärelementes aus Fig. 1,
Fig. 10b den Ausschnitt D von Fig. 10a in vergrößerter Darstellung mit dem Außenteil in der Neutralposition und
Fig. 10c den Ausschnitt D von Fig. 10a in vergrößerter Darstellung mit dem Außenteil in der Anschlagposition.

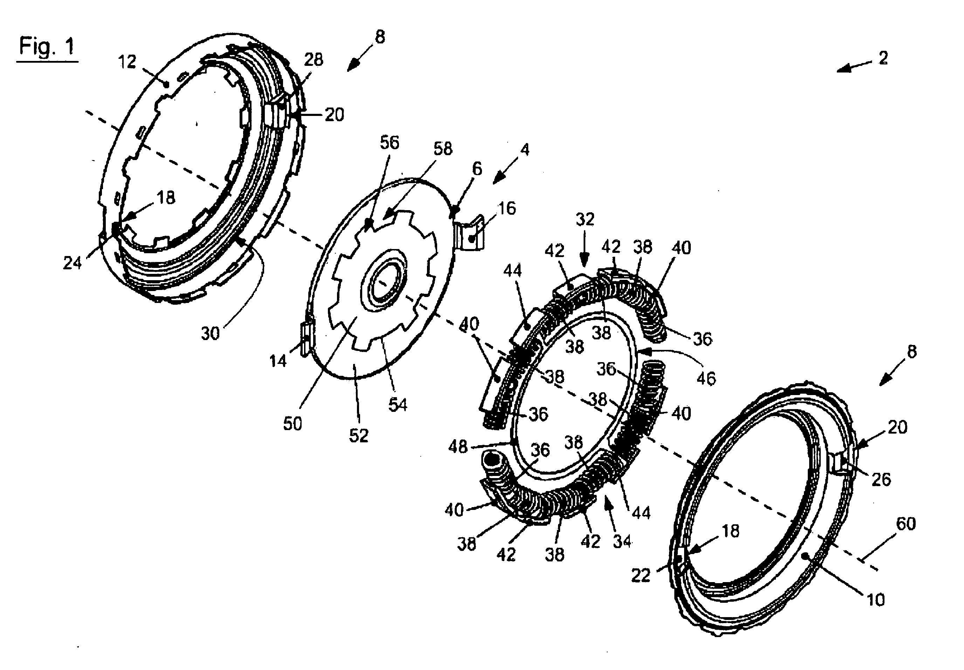

Fig. 1 zeigt eine perspektivische Explosionsdarstellung einer Ausführungsform des erfindungsgemäßen Torsionsschwingungsdämpfers 2. Der Torsionsschwingungsdämpfer 2 weist ein antriebsseitiges bzw. motorseitiges Primärelement 4 in Form einer Mittelscheibe 6 und ein abtriebsseitiges bzw. getriebeseitiges Sekundärelement 8 auf, wobei sich letzteres aus einer vorderen Seitenscheibe 10 und einer hinteren Seitenscheibe 12 zusammensetzt, die drehfest miteinander verbunden sind.

Das Primärelement 4 in Form der Mittelscheibe 6 weist zwei Mitnehmer auf, die nachstehend als Primärmitnehmer 14, 16 bezeichnet werden und einander gegenüberliegend am Außenumfang der Mittelscheibe 6 angeordnet sind. An den beiden Seitenscheiben 10, 12 des Sekundärelements 8 sind ebenfalls zwei Mitnehmer vorgesehen, die nachstehend als Sekundärmitnehmer 18, 20 bezeichnet werden. Wie das Sekundärelement 8 selbst setzen sich auch die Sekundärmitnehmer 18 bzw. 20 aus einem Vorderteil 22 an der vorderen Seitenscheibe 10 und einem Hinterteil 24 an der hinteren Seitenscheibe 12 bzw. aus einem Vorderteil 26 an der vorderen Seitenscheibe 10 und einem Hinterteil 28 an der hinteren Seitenscheibe 12 zusammen. Primär- bzw. Sekundärmitnehmer 14, 16, 18, 20 sind vorzugsweise einstückig mit dem Primär- bzw. Sekundärelement 4, 8 ausgebildet.

Zwischen der vorderen Seitenscheibe 10 und der hinteren Seitenscheibe 12 ist im zusammengesetzten Zustand ein Ringraum 30 ausgebildet. In dem Ringraum 30 sind zwei Federeinrichtungen 32, 34 zur federelastischen Kopplung von Primärelement 4 und Sekundärelement 8 vorgesehen. Die Federeinrichtungen 32, 34 weisen mehrere in Umfangsrichtung hintereinander angeordnete Federelemente 36, 38 auf, die vorzugsweise als Spiralfedern ausgebildet sind. Hierbei sind die endseitigen Federelemente 36, die stirnseitig unmittelbar an die Primär- und Sekundärmitnehmer 14, 16, 18, 20 angrenzen, von den zwischenliegenden Federelementen 38 zu unterscheiden, die an keinen Primär- oder Sekundärmitnehmer 14, 16 18, 20 angrenzen.

Die Federeinrichtungen 32, 34 umfassen ferner Gleitschuhe 40, 42, 44, die stirnseitig zwischen den Federelementen 32, 34 angeordnet sind. Hierbei sind zunächst die endseitigen Gleitschuhe 40, die an die endseitigen Federelemente 36 angrenzen, von den anderen Gleitschuhen 42, 44 zu unterscheiden. Ferner sind die Gleitschuhe 42 von den Gleitschuhen 44 zu unterscheiden, da letztere als Teil eines Dividierbleches 46 ausgebildet sind. Dieses Dividierblech 46 umfasst ein Ringelement 48 an dem umfangsmäßig die Gleitschuhe 44 angeordnet sind, wobei sich der eine Gleitschuh 44 zwischen die Federelemente 38 der einen Federeinrichtung 32 und der andere Gleitschuh 44 zwischen die Federelemente 38 der anderen Federeinrichtung 34 erstreckt.

Das Primärelement 4 bzw. die Mittelscheibe 6 ist zweiteilig aufgebaut, d. h. dieses umfasst ein radial innenliegendes Innenteil 50 und ein radial außenliegendes Außenteil 52. Während das Außenteil 52 die Primärmitnehmer 14, 16 aufnimmt, die im Einbauzustand an die freien Enden der endseitigen Federelemente 36 angrenzen, ist das Innenteil 50 beispielsweise mit einer Motorausgangswelle verbindbar. Zwischen dem Innenteil 50 und dem Außenteil 52 ist ein Dämpfungsteil 54 zur Schwingungsdämpfung vorgesehen. Das Innenteil 50 ist über das Dämpfungsteil 54 drehelastisch mit dem Außenteil 52 gekoppelt. Zur weiteren Kopplung von Innen- und Außenteil 50, 52 weist das Innenteil 50 eine Außenverzahnung 56 und das Außenteil 50 eine Innenverzahnung 58 auf, wobei die Außenverzahnung 56 in die Innenverzahnung 58 eingreift.

Eine Rotation einer Motorausgangswelle (nicht dargestellt) kann über das Innenteil 52, das Dämpfungselement 54, das Außenteil 52, die Primärmitnehmer 14, 16, die Federeinrichtungen 32, 34 und die Sekundärmitnehmer 18, 20 der drehfest miteinander verbundenen Seitenscheiben 10, 12 federelastisch auf das getriebeseitige Sekundärelement 8 übertragen werden, wobei die Drehachse des Torsionsschwingungsdämpfers 2 in Fig. 1 mit dem Bezugszeichen 60 versehen ist.

Durch die Anordnung des Dämpfungsteils 52 zwischen dem Außenteil 52 und dem Innenteil 50 werden Anregungen oder Stöße, die durch die endseitigen Federelemente 36 aufgrund von Zug-/Schubwechseln auf die Primärmitnehmer 14, 16 einwirken und zu Schwingungen des Außenteils 52 führen, wirksam gedämpft. Ein Übertragung der Schwingungen auf das Innenteil 50 und somit auf die Motorausgangswelle und den Motor findet nicht statt. Die Geräuschentwicklung ist besonders wirksam reduziert.

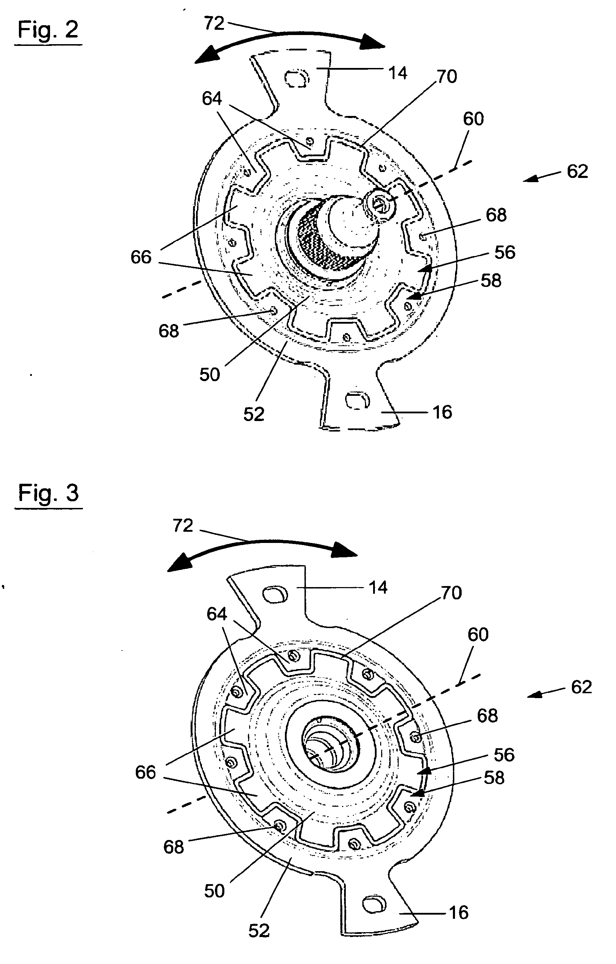

Während Fig. 1 lediglich ein schematisch angedeutetes Primärelement 4 zeigt, werden nachstehend unter Bezugnahme auf die Fig. 2 bis 10c weitere vorteilhafte Ausführungsformen von Primärelementen beschrieben, die in dem Torsionsschwingungsdämpfer 2 von Fig. 1 einsetzbar sind. Die vorstehende allgemeine Beschreibung des Primärelements 4 gilt auch für die anderen Ausführungsformen, wobei gleiche Bezugszeichen für gleiche oder ähnliche Teile verwendet werden.

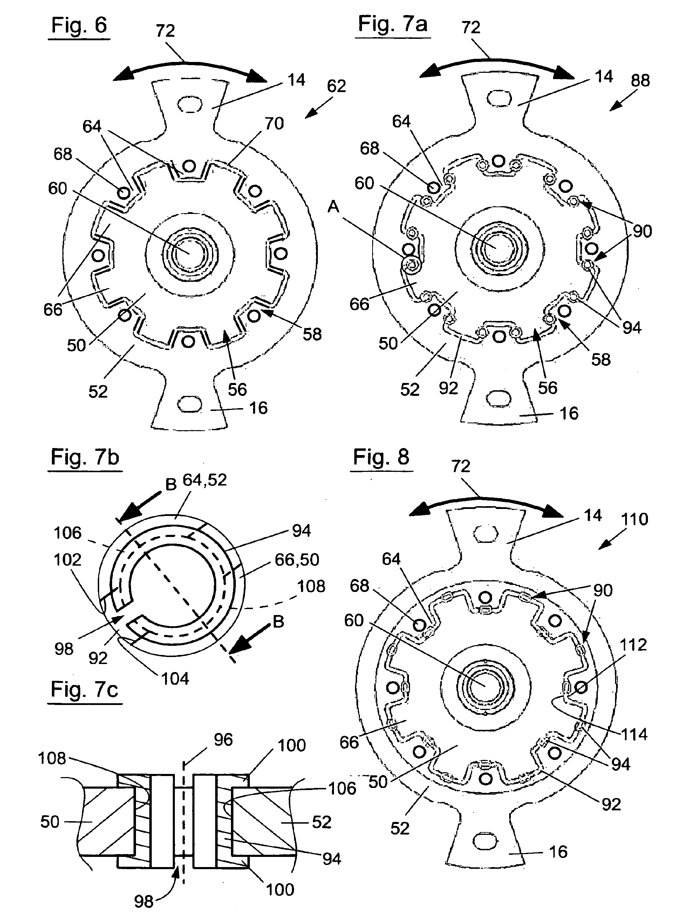

Die Fig. 2 bis 6 zeigen eine erste Ausführungsform eines Primärelements 62 für den Torsionsschwingungsdämpfer 2 von Fig. 1. Die Innenverzahnung 58 umfasst mehrere Zähne 64, die sich radial nach innen zwischen Zähne 66 der Außenverzahnung 56 erstrecken. In den Zähnen 64 der Innenverzahnung 58 sind Aussparungen 68 vorgesehen, die sich in axialer Richtung durch das Außenteil 52 erstrecken. Zwischen der Innenverzahnung 58 und der Außenverzahnung 56 ist ein einzelnes, zusammenhängendes Dämpfungsteil 70 vorgesehen. Das Dämpfungsteil 70 ist im Wesentlichen ringförmig ausgebildet und erstreckt sich somit in Umfangsrichtung 72 durchgehend zwischen der Innen- und der Außenverzahnung 58, 56, wie dies insbesondere in Fig. 6 zu erkennen ist, die eine Vorderansicht des Primärelements 62 zeigt.

Das Dämpfungsteil 70 ist aus einem elastischen Material gefertigt, wobei bei dieser Ausführungsform ein Elastomer verwendet wurde. So kann es sich in der vorliegenden Ausführungsform beispielsweise um ein Gummi handeln, das in die Lücke zwischen der Innenverzahnung 58 und der Außenverzahnung 56 eingebracht wurde, so dass das Innenteil 50 an keiner Stelle unmittelbar an das Außenteil 52 angrenzt.

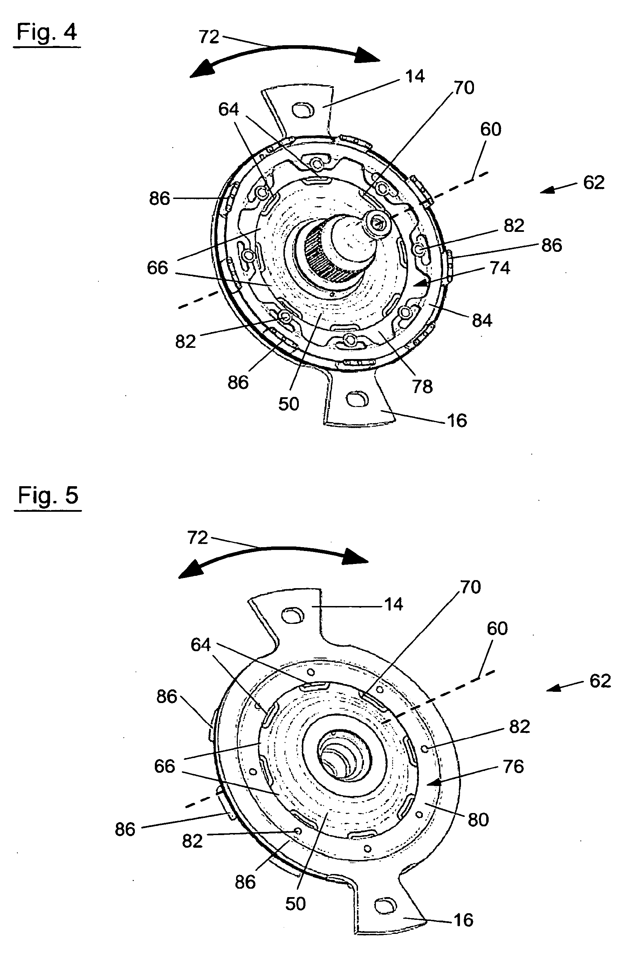

An dem Primärelement 62 sind ferner zwei seitliche Halteteile 74, 76 vorgesehen, die an der Vorderseite des Primärelements 62 (Fig. 4) und an der Rückseite des Primärelements 62 (Fig. 5) angeordnet sind. Die seitlichen Halteteile 74, 76 sind als ringscheibenförmige Haltebleche 78, 80 ausgebildet und seitlich auf einer Höhe mit der Innen- und Außenverzahnung 58, 56 angeordnet, so dass das Innenteil 50 und das Außenteil 52 in ihrer axialen Ausrichtung zueinander fixiert sind. Ein seitliches Herausrutschen des Innenteils 50 in axialer Richtung aus dem Außenteil 52 ist damit unterbunden. Die Haltebleche 78, 80 sind dabei über Nieten 82, die sich durch die Aussparungen 68 erstrecken, mit dem Außenteil 52 drehfest verbunden. Grundsätzlich können die Haltebleche 78, 80 jedoch auch mit dem Innenteil 50 verbunden sein.

Wie aus Fig. 4 ersichtlich, wird das Halteblech 78 ferner als Reibblech verwendet. So wird über die Nieten 82 ferner ein Führungsblech 84 an dem Halteblech 78 befestigt, wobei zwischen dem Halteblech 78 und dem Führungsblech 84 Reibklötze 86 geführt sind, die in Umfangsrichtung 72 verschoben werden können und eine vorbestimmte Reibung zwischen dem Primärelement 62 und dem Sekundärelement 8 bewirken sollen. Auf diese Weise haben die Nieten 82 und das Haltblech 78 eine weitere Funktion.

Die Fig. 7a bis 7c zeigen eine zweite Ausführungsform eines Primärelements 88 für den Torsionsschwingungsdämpfer 2 von Fig. 1. Im Folgenden werden lediglich die Unterschiede zu der ersten Ausführungsform erläutert, wobei bezüglich des restlichen Aufbaus die vorangehende Beschreibung entsprechend gilt und für gleiche oder ähnliche Teile gleiche Bezugszeichen verwendet werden. Bei der zweiten Ausführungsform sind mehrere, voneinander beabstandete Dämpfungsteile 90 vorgesehen, die innerhalb des Schlitzes 92 zwischen der Innen- und Außenverzahnung 58, 56 von Außen- und Innenteil 52, 50 angeordnet sind. Die Dämpfungsteile 90 sind dabei als rohrförmige Hülsen 94 ausgebildet, deren Längsachsen 96 sich quer zur Umfangsrichtung 72 und parallel zur Drehachse 60 des Torsionsschwingungsdämpfers 2 erstrecken.

Die rohrförmigen Hülsen 94 weisen ferner einen Längsschlitz 98 auf, der eine größere Elastizität jeder einzelnen Hülse 94 bewirkt, wobei der Längsschlitz 98 vorteilhafterweise dem Schlitz 92 zwischen der Innen- und Außenverzahnung 58, 56 zugewandt ist, wie dies aus Fig. 7b hervorgeht. Die Hülsen 94 sind endseitig mit Anschlägen versehen, die als Bördelungen 100 ausgebildet sind. Die Bördelungen 100 hintergreifen die Vorder- und Rückseite des Primärelements 88 und bewirken damit eine axiale Fixierung von Innen- und Außenteil 50, 52 zueinander, ähnlich wie dies durch die oben genannten seitlichen Halteteile 74, 76 bewirkt wird. In der in Fig. 7a gezeigten Ausführungsform könnten solche seitlichen Halteteile 74, 76 (Fig. 4 und 5) ergänzend zu oder in Kombination mit den Dämpfungsteilen 90 verwendet werden. So ist es beispielsweise von Vorteil, wenn die seitlichen Halteteile 74, 76 jeweils an den Endseiten der Dämpfungsteile 90 befestigt wären, um deren Anschläge auszubilden.

Die Dämpfungsteile 90 sind ausschließlich zwischen den einander zugeordneten bzw. gegenüberliegenden Zahnflanken 102, 104 der Innen- und Außenverzahnung 58, 56 angeordnet. Dies ist insofern von Vorteil, als dass in erster Linie über die einander zugeordneten Zahnflanken 102, 104 ein Drehmoment von dem Innenteil 50 auf das Außenteil 52 übertragen wird und umgekehrt. In den Zahnflanken 102, 104 sind einander gegenüberliegende Vertiefungen 106, 108 vorgesehen, in denen das Dämpfungsteil 90 jeweils zum Teil einliegt.

Wie aus Fig. 8 ersichtlich, die eine dritte Ausführungsform eines Primärelements 110 für den Torsionsschwingungsdämpfer 2 von Fig. 1 zeigt, können die Dämpfungsteile 90 auch zwischen einem Zahnkamm 112 einerseits und einem gegenüberliegenden Zahnlückengrund 114 andererseits angeordnet sein, jedoch ist die zweite Ausführungsform aufgrund der direkteren Anordnung der Dämpfungsteile 90 im Kraftfluss bevorzugt.

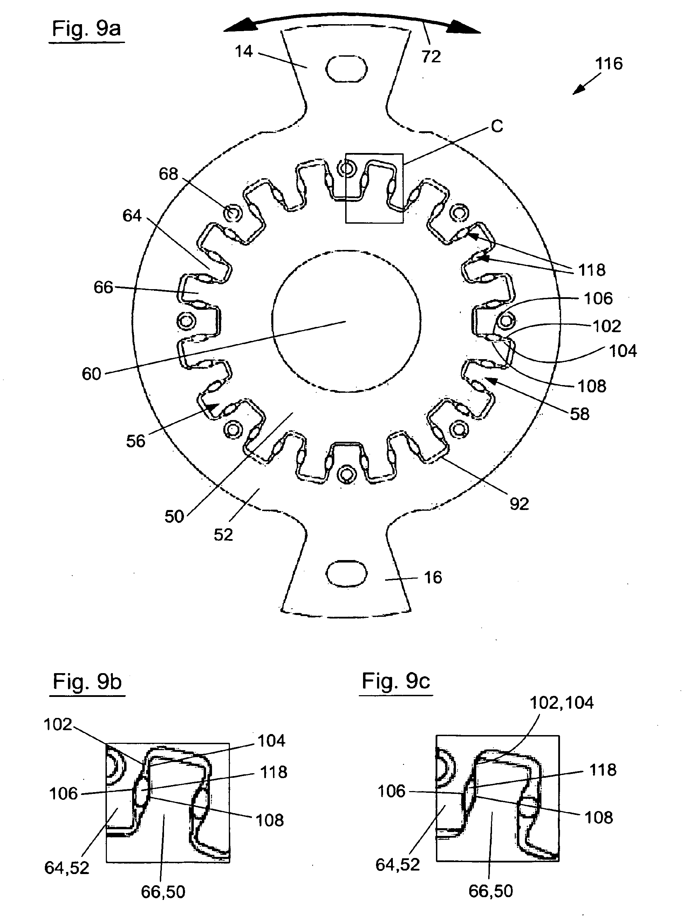

Die Fig. 9a bis 9c zeigen eine vierte Ausführungsform eines Primärelements 116 für den Torsionsschwingungsdämpfer 2 von Fig. 1. Im folgenden werden lediglich die Unterschiede zu der zweiten Ausführungsform (Fig. 7a) erläutert, wobei die vorangehende Beschreibung bezüglich des restlichen Aufbaus entsprechend gilt und für gleiche oder ähnliche Teile gleiche Bezugszeichen verwendet werden. Im Gegensatz zu der zweiten Ausführungsform, kommen bei der vierten Ausführungsform wiederum Dämpfungsteile 118 aus einem Elastomer zum Einsatz. Fig. 9a zeigt das Außenteil 52 in einer Neutralposition, in der die einander zugewandten Zahnflanken 102, 104 nicht unmittelbar aneinander angrenzen, wie dies insbesondere in Fig. 9b zu erkennen ist. Vielmehr liegt das Dämpfungsteil 118 elastisch zusammengedrückt und somit unter Vorspannung in den Vertiefungen 106, 108 ein und trennt die Zahnflanken 102, 104 voneinander.

Nun kann das Außenteil 52 um einen vorbestimmten Auslenkwinkel in Umfangsrichtung 72 relativ zu dem Innenteil 50 gedreht werden, bis das Außenteil 52 in eine Anschlagposition gelangt, die in Fig. 9c angedeutet ist. Der vorbestimmte Auslenkwinkel ist dabei kleiner als ein vorbestimmter Auslenkwinkel zwischen dem Primärelement 4 und dem Sekundärelement 8. Hierdurch ist sichergestellt, dass Torsionsschwingungen mit großer Amplitude in erster Linie durch die Federeinrichtungen 32, 34 des Torsionsschwingungsdämpfers 2 gedämpft werden. Während des Drehens in die Anschlagposition werden die Dämpfungsteile 118, die in Drehrichtung liegen, weiter elastisch zusammengedrückt bis sie vollständig in den Vertiefungen 106, 108 einliegen und die Bereiche der einander zugewandten Zahnflanken 102, 104, die keine Vertiefung 106, 108 aufweisen, unmittelbar aneinander angrenzen. Auf diese Weise wird verhindert, dass bei besonders starken Drehmomentstößen ein Zerquetschen bzw. Zerdrücken des Dämpfungsteiles 118 erfolgt.

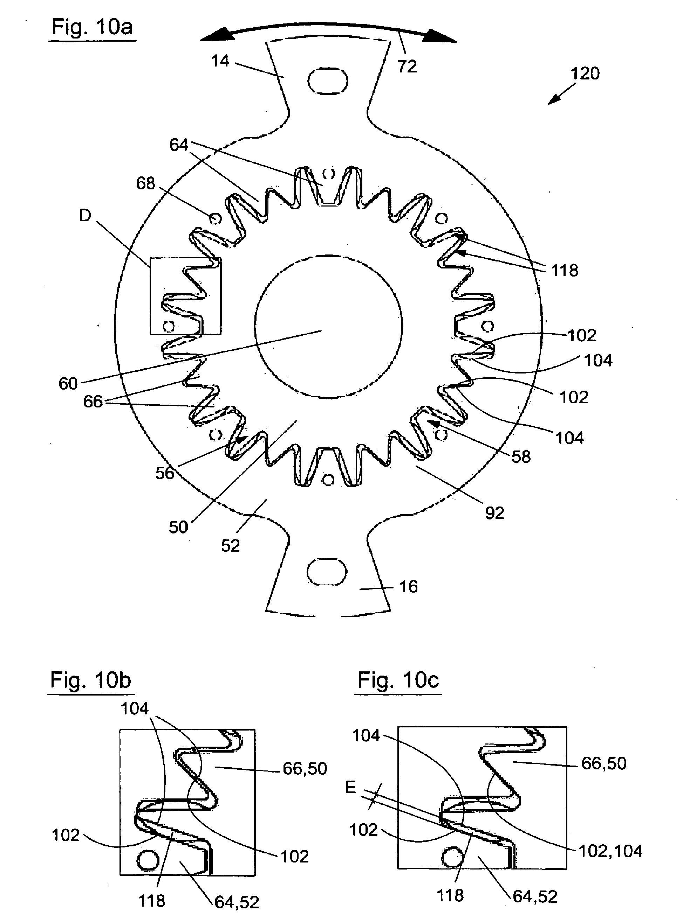

Die Fig. 10a bis 10c zeigen eine fünfte Ausführungsform eines Primärelements 120 für den Torsionsschwingungsdämpfer 2 von Fig. 1. Im Folgenden werden lediglich die Unterschiede zu der vierten Ausführungsform (Fig. 9a) erläutert, wobei die vorangehende Beschreibung bezüglich des restlichen Aufbaus entsprechend gilt und für gleiche oder ähnliche Teile gleiche Bezugszeichen verwendet werden. Bei der fünften Ausführungsform sind nicht zwischen allen einander zugeordneten Zahnflanken 102, 104 Dämpfungsteile 118 vorgesehen. Auch müssen die die Dämpfungsteile 118 nicht in Vertiefungen 106, 108 in den Zahnflanken 102, 104 einliegen. Ein Zerquetschen bzw. Zerdrücken der Dämpfungsteile 118 bei besonders starken Drehstößen wird dadurch verhindert, dass die Innen- und Außenverzahnung 58, 56 derart aufeinander abgestimmt sind, dass zwei einander zugeordnete Zahnflanken 102, 104 in der Anschlagposition (Fig. 9c) des Außenteils 52 unmittelbar aneinander angrenzen während zwischen zwei anderen einander zugeordneten Zahnflanken 102, 104, zwischen denen ein Dämpfungsteil 118 angeordnet ist, ein Abstand E verbleibt, der eine Zerstörung des Dämpfungsteils 118 verhindert.

In den vorstehend beschriebenen Ausführungsformen wurde lediglich ein zweiteiliges Primärelement beschrieben. Erfindungsgemäß kann jedoch auch das Sekundärelement 8 ein Innenteil und ein Außenteil, an dem der Sekundärmitnehmer angeordnet ist, aufweisen, wobei auch in diesem Fall mindestens ein Dämpfungsteil zur Schwingungsdämpfung zwischen dem Innenteil und dem Außenteil vorgesehen ist.

### Bezugszeichenliste

- 2: Torsionsschwingungsdämpfer
- 4: Primärelement
- 6: Mittelscheibe
- 8: Sekundärelement
- 10: vordere Seitenscheibe
- 12: hintere Seitenscheibe
- 14: Primärmitnehmer
- 16: Primärmitnehmer
- 18: Sekundärmitnehmer
- 20: Sekundärmitnehmer
- 22: Vorderteil
- 24: Hinterteil
- 26: Vorderteil
- 28: Hinterteil
- 30: Ringraum
- 32: erste Federeinrichtung
- 34: zweite Federeinrichtung
- 36: endseitiges Federelement
- 38: Federelement
- 40: Gleitschuh
- 42: Gleitschuh
- 44: Gleitschuh
- 46: Dividierblech
- 48: Ringelement
- 50: Innenteil
- 52: Außenteil
- 54: Dämpfungsteil
- 56: Innenverzahnung
- 58: Außenverzahnung
- 60: Drehachse
- 62: Primärelement (erste Ausführungsform)
- 64: Zähne der Außenverzahnung
- 66: Zähne der Innenverzahnung
- 68: Aussparungen
- 70: Dämpfungsteil
- 72: Umfangsrichtung
- 74: seitliches Halteteil
- 76: seitliche Halteteil
- 78: ringscheibenförmiges Halteblech
- 80: ringscheibenförmiges Halteblech
- 82: Nieten
- 84: Führungsblech
- 86: Reibklötze
- 88: Primärelement (zweite Ausführungsform)
- 90: Dämpfungsteile
- 92: Schlitz
- 94: rohrförmige Hülse
- 96: Längsachse der Hülse
- 98: Längsschlitz
- 100: Bördelung
- 102: Zahnflanke
- 104: Zahnflanke
- 106: Vertiefung in der Zahnflanke
- 108: Vertiefung in der Zahnflanke
- 110: Primärelement (dritte Ausführungsform)
- 112: Zahnkamm
- 114: Zahnlückengrund
- 116: Primärelement (vierte Ausführungsform)
- 118: Dämpfungsteile
- 120: Primärelement (fünfte Ausführungsform)

## Patentansprüche

1. Torsionsschwingungsdämpfer mit einem antriebsseitigen Primärelement (4, 62, 88, 110, 116, 120) mit mindestens einem Primärmitnehmer (14, 16), einem abtriebsseitigen Sekundärelement (8) mit mindestens einem Sekundärmitnehmer (18, 20) und mindestens einer Federeinrichtung (32, 34) zwischen dem Primärmitnehmer (14, 16) und dem Sekundärmitnehmer (18, 20) zur federelastischen Kopplung von Primärelement (4, 62, 88, 110, 116, 120) und Sekundärelement (8), wobei das Primärelement (4, 62, 88, 110, 116, 120) ein Innenteil (50) und ein Außenteil (52), an dem der Primärmitnehmer (14, 16) angeordnet ist, aufweist, und mindestens ein Dämpfungsteil (54, 70, 90, 118) zur Schwingungsdämpfung zwischen dem Innenteil (50) und dem Außenteil (52) vorgesehen ist, **dadurch gekennzeichnet, dass** das Innenteil (50) eine Außenverzahnung (56) und das Außenteil (52) eine Innenverzahnung (58) aufweist, wobei die Außenverzahnung (56) in die Innenverzahnung (58) eingreift, und das mindestens eine Dämpfungsteil (54, 70, 90, 118) zwischen der Innen- und der Außenverzahnung (58, 56) angeordnet ist.

2. Torsionsschwingungsdämpfer nach Anspruch 1, **dadurch gekennzeichnet, dass** auch das Sekundärelement (8) ein Innenteil und ein Außenteil, an dem der Sekundärmitnehmer angeordnet ist, aufweist, wobei mindestens ein Dämpfungsteil zur Schwingungsdämpfung zwischen dem Innenteil und dem Außenteil vorgesehen ist.

3. Torsionsschwingungsdämpfer nach einem der vorangehenden Ansprüche 1 oder 2, **dadurch gekennzeichnet, dass** das Innenteil (50) über das Dämpfungsteil (54, 70, 90, 118) drehelastisch mit dem Außenteil (52) gekoppelt ist.

4. Torsionsschwingungsdämpfer nach einem der Ansprüche 1 bis 3, **dadurch gekennzeichnet, dass** das mindestens eine Dämpfungsteil (54, 70, 90, 118) elastisch verformbar ist, vorzugsweise aus einem Elastomer besteht.

5. Torsionsschwingungsdämpfer nach einem der vorangehenden Ansprüche, **dadurch gekennzeichnet, dass** das Dämpfungsteil (54, 70) in Umfangsrichtung durchgehend zwischen der Innen- und der Außenverzahnung (58, 56) angeordnet ist.

6. Torsionsschwingungsdämpfer nach einem der Ansprüche 1 bis 4, **dadurch gekennzeichnet, dass** mehrere, voneinander beabstandete Dämpfungsteile (90, 118) vorgesehen sind.

7. Torsionsschwingungsdämpfer nach Anspruch 6, **dadurch gekennzeichnet, dass** die Dämpfungsteile (90) als rohrförmige Hülsen (94) ausgebildet sind, deren Längsachsen (96) sich quer zur Umfangsrichtung (72) erstrecken.

8. Torsionsschwingungsdämpfer nach Anspruch 7, **dadurch gekennzeichnet, dass** sich die Längsachsen (96) der rohrförmigen Hülsen (94) parallel zur Drehachse (60) des Torsionsschwingungsdämpfers (2) erstrecken.

9. Torsionsschwingungsdämpfer nach einem der Ansprüche 7 oder 8, **dadurch gekennzeichnet, dass** die rohrförmigen Hülsen (94) einen Längsschlitz (98) aufweisen.

10. Torsionsschwingungsdämpfer nach einem der Ansprüche 7 bis 9, **dadurch gekennzeichnet, dass** die rohrförmigen Hülsen (94) endseitig mit Anschlägen, vorzugsweise Bördelungen (100), zur axialen Fixierung von Innen- und Außenteil (50, 52) zueinander versehen sind.

11. Torsionsschwingungsdämpfer nach einem der vorangehenden Ansprüche, **dadurch gekennzeichnet, dass** mindestens eine, vorzugsweise zwei seitlich zur Innen- und Außenverzahnung (58, 56) angeordnete Halteteile (74, 76) zur axialen Fixierung von Innen- und Außenteil (50, 52) zueinander vorgesehen sind.

12. Torsionsschwingungsdämpfer nach Anspruch 11, **dadurch gekennzeichnet, dass** die seitlichen Halteteile (74, 76) ringscheibenförmig, vorzugsweise als ringscheibenförmige Haltebleche (78, 80) ausgebildet sind.

13. Torsionsschwingungsdämpfer nach Anspruch 12, **dadurch gekennzeichnet, dass** die seitlichen Halteteile (74, 76) an dem Innen- oder Außenteil (50, 52) oder an den Dämpfungsteilen (90, 118) befestigt sind.

14. Torsionsschwingungsdämpfer nach einem der vorangehenden Ansprüche, **dadurch gekennzeichnet, dass** die Dämpfungsteile (54, 70, 90, 118), vorzugsweise ausschließlich, zwischen den einander zugeordneten Zahnflanken (102, 104) der Innen- und Außenverzahnung (58, 56) vorgesehen sind.

15. Torsionsschwingungsdämpfer nach Anspruch 14, **dadurch gekennzeichnet, dass** in den Zahnflanken (102, 104) Vertiefungen (106, 108) vorgesehen sind, in denen das Dämpfungsteil (90, 118) teilweise einliegt.

16. Torsionsschwingungsdämpfer nach einem der vorangehenden Ansprüche, **dadurch gekennzeichnet, dass** die Innen- und Außenverzahnung (58, 56) derart ausgebildet sind, dass das Außenteil (52) von einer Neutralposition, in der die Zahnflanken (102, 104) der Innen- und Außenverzahnung (58, 56) nicht unmittelbar aneinander angrenzen, in eine Umfangsrichtung (72) relativ zu dem Innenteil (50) und unter elastischer Verformung der Dämpfungsteile (118) in eine Anschlagposition drehbar ist, in der mindestens eine Zahnflanke (102) der Innenverzahnung (58) unmittelbar an eine Zahnflanke (104) der Außenverzahnung (104) angrenzt.

17. Torsionsschwingungsdämpfer nach Anspruch 16, **dadurch gekennzeichnet, dass** die Dämpfungsteile (118) in der Neutralposition unter Vorspannung zwischen den einander zugeordneten Zahnflanken (102, 104) der Innen- und Außenverzahnung (58, 56) angeordnet sind.

18. Torsionsschwingungsdämpfer nach einem der Ansprüche 16 oder 17, **dadurch gekennzeichnet, dass** das Außenteil (52) um einen vorbestimmten Auslenkwinkel von der Neutralposition in die Anschlagposition drehbar ist, wobei der vorbestimmte Auslenkwinkel kleiner als ein vorbestimmter Auslenkwinkel zwischen dem Primärelement (4, 62, 88, 110, 116, 120) und dem Sekundärelement (8) ist.

## Claims

1. Torsional vibration damper with a drive-side primary element (4, 62, 88, 110, 116, 120) having at least one primary dog (14, 16), with an output-side secondary element (8) having at least one secondary dog (18, 20), with at least one spring device (32, 34) between the primary dog (14, 16) and the secondary dog (18, 20) for the spring-elastic coupling of the primary element (4, 62, 88, 110, 116, 120) and secondary element (8), the primary element (4, 62, 88, 110, 116, 120) having an inner part (50) and an outer part (52), on which the primary dog (14, 16) is arranged, and at least one damping part (54, 70, 90, 118) for vibration damping being provided between the inner part (50) and the outer part (52), **characterized in that** the inner part (50) has an external toothing (56) and the outer part (52) an internal toothing (58), the external toothing (56) engaging into the internal toothing (58), and the at least one damping part (54, 70, 90, 118) is arranged between the internal and the external toothing (58, 56).

2. Torsional vibration damper according to Claim 1, **characterized in that** the secondary element (8) also has an inner part and an outer part, on which the secondary dog is arranged, at least one damping part for vibration damping being provided between the inner part and the outer part.

3. Torsional vibration damper according to either one of the preceding Claims 1 and 2, **characterized in that** the inner part (50) is coupled rotationally elastically to the outer part (52) via the damping part (54, 70, 90, 118).

4. Torsional vibration damper according to one of Claims 1 to 3, **characterized in that** the at least one damping part (54, 70, 90, 118) is elastically deformable, preferably consists of an elastomer.

5. Torsional vibration damper according to one of the preceding claims, **characterized in that** the damping part (54, 70) is arranged continuously in the circumferential direction between the internal and the external toothing (58, 56).

6. Torsional vibration damper according to one of Claims 1 to 4, **characterized in that** a plurality of damping parts (90, 118) spaced apart from one another are provided.

7. Torsional vibration damper according to Claim 6, **characterized in that** the damping parts (90) are designed as tubular sleeves (94), the longitudinal axes (96) of which extend transversely with respect to the circumferential direction (72).

8. Torsional vibration damper according to Claim 7, **characterized in that** the longitudinal axes (96) of the tubular sleeves (94) extend parallel to the axis of rotation (60) of the torsional vibration damper (2).

9. Torsional vibration damper according to either one of Claims 7 and 8, **characterized in that** the tubular sleeves (94) have a longitudinal slot (98).

10. Torsional vibration damper according to one of Claims 7 to 9, **characterized in that** the tubular sleeves (94) are provided on the end faces with stops, preferably crimpings (100), for fixing the inner and the outer part (50, 52) axially with respect to one another.

11. Torsional vibration damper according to one of the preceding claims, **characterized in that** at least one, preferably two holding parts (74, 76) arranged laterally with respect to the internal and external toothing (58, 56) are provided for fixing the inner and the outer parts (50, 52) axially with respect to one another.

12. Torsional vibration damper according to Claim 11, **characterized in that** the lateral holding parts (74, 76) are designed in the form of an annular disc, preferably as holding plates (78, 80) of annular disc form.

13. Torsional vibration damper according to Claim 12, **characterized in that** the lateral holding parts (74, 76) are fastened to the inner or outer parts (50, 52) or to the damping parts (90, 118).

14. Torsional vibration damper according to one of the preceding claims, **characterized in that** the damping parts (54, 70, 90, 118) are provided, preferably exclusively, between the mutually assigned tooth flanks (102, 104) of the internal and external toothings (58, 56).

15. Torsional vibration damper according to Claim 14, **characterized in that** depressions (106, 108), in which the damping part (90, 118) is partially seated, are provided in the tooth flanks (102, 104).

16. Torsional vibration damper according to one of the preceding claims, **characterized in that** the internal and the external toothing (58, 56) are designed in such a way that, from a neutral position in which the tooth flanks (102, 104) of the internal and external toothing (58, 56) are not directly adjacent to one another, the outer part (52) can be rotated in a circumferential direction (72) in relation to the inner part (50), along with the elastic deformation of the damping parts (118), into a stop position in which at least one tooth flank (102) of the internal toothing (58) is directly adjacent to a tooth flank (104) of the external toothing (56).

17. Torsional vibration damper according to Claim 16, **characterized in that,** in the neutral position, the damping parts (118) are arranged under prestress between the mutually assigned tooth flanks (102, 104) of the internal and external toothing (58, 56).

18. Torsional vibration damper according to either one of Claims 16 and 17, **characterized in that** the outer part (52) can be rotated through a predetermined deflection angle from the neutral position into the stop position, the predetermined deflection angle being smaller than a predetermined deflection angle between the primary element (4, 62, 88, 110, 116, 120) and the secondary element (8).

## Revendications

1. Amortisseur de vibrations torsionnelles comprenant un élément primaire côté entraînement (4, 62, 88, 110, 116, 120) avec au moins un entraîneur primaire (14, 16), un élément secondaire côté sortie (8), avec au moins un entraîneur secondaire (18, 20), et au moins un dispositif de ressort (32, 34) entre l'entraîneur primaire (14, 16) et l'entraîneur secondaire (18, 20), pour l'accouplement élastique de l'élément primaire (4, 62, 88, 110, 116, 120) et de l'élément secondaire (8), l'élément primaire (4, 62, 88, 110, 116, 120) présentant une partie intérieure (50) et une partie extérieure (52) sur laquelle est disposé l'entraîneur primaire (14, 16), et au moins une partie d'amortissement (54, 70, 90, 118) étant prévue pour l'amortissement des vibrations entre la partie intérieure (50) et la partie extérieure (52), **caractérisé en ce que** la partie intérieure (50) présente une denture extérieure (56) et la partie extérieure (52) présente une denture intérieure (58), la denture extérieure (56) venant en prise dans la denture intérieure (58), et l'au moins une première partie d'amortissement (54, 70, 90, 118) étant disposée entre la denture intérieure et la denture extérieure (58, 56).

2. Amortisseur de vibrations torsionnelles selon la revendication 1, **caractérisé en ce que** l'élément secondaire (8) présente également une partie intérieure et une partie extérieure sur laquelle est disposé l'entraîneur secondaire, au moins une partie d'amortissement étant prévue pour l'amortissement des vibrations entre la partie intérieure et la partie extérieure.

3. Amortisseur de vibrations torsionnelles selon l'une quelconque des revendications précédentes 1 ou 2, **caractérisé en ce que** la partie intérieure (50) est accouplée par le biais de la partie d'amortissement (54, 70, 90, 118) de manière élastiquement rotative à la partie extérieure (52).

4. Amortisseur de vibrations torsionnelles selon l'une quelconque des revendications précédentes 1 à 3, **caractérisé en ce que** l'au moins une partie d'amortissement (54, 70, 90, 118) peut être déformé élastiquement, de préférence se compose d'élastomère.

5. Amortisseur de vibrations torsionnelles selon l'une quelconque des revendications précédentes, **caractérisé en ce que** la partie d'amortissement (54, 70) est disposée de manière continue dans la direction périphérique entre la denture intérieure et la denture extérieure (58, 56).

6. Amortisseur de vibrations torsionnelles selon l'une quelconque des revendications 1 à 4, **caractérisé en ce que** plusieurs parties d'amortissement (90, 118) espacées les unes des autres sont prévues.

7. Amortisseur de vibrations torsionnelles selon la revendication 6, **caractérisé en ce que** les parties d'amortissement (90) sont réalisées sous forme de douilles tubulaires (94) dont les axes longitudinaux (96) s'étendent transversalement à la direction périphérique (72).

8. Amortisseur de vibrations torsionnelles selon la revendication 7, **caractérisé en ce que** les axes longitudinaux (96) des douilles tubulaires (94) s'étendent parallèlement à l'axe de rotation (60) de l'amortisseur de vibrations torsionnelles (2).

9. Amortisseur de vibrations torsionnelles selon l'une quelconque des revendications 7 ou 8, **caractérisé en ce que** les douilles tubulaires (94) présentent une fente longitudinale (98).

10. Amortisseur de vibrations torsionnelles selon l'une quelconque des revendications 7 à 9, **caractérisé en ce que** les douilles tubulaires (94) sont pourvues du côté de leur extrémité de butées, de préférence de bordures (100) pour la fixation axiale de la partie intérieure et de la partie extérieure (50, 52) l'une par rapport à l'autre.

11. Amortisseur de vibrations torsionnelles selon l'une quelconque des revendications précédentes, **caractérisé en ce qu'**au moins une, de préférence deux, parties de retenue (74, 76) disposées latéralement par rapport à la denture intérieure et à la denture extérieure (58, 56) sont prévues pour la fixation axiale de la partie intérieure et de la partie extérieure (50, 52) l'une par rapport à l'autre.

12. Amortisseur de vibrations torsionnelles selon la revendication 11, **caractérisé en ce que** les parties de retenue latérales (74, 76) sont réalisées sous forme de disques annulaires, de préférence sous forme de tôles de retenue (78, 80) en forme de disques annulaires.

13. Amortisseur de vibrations torsionnelles selon la revendication 12, **caractérisé en ce que** les parties de retenue (74, 76) sont fixées sur la partie intérieure ou la partie extérieure (50, 52) ou sur les parties d'amortissement (90, 118).

14. Amortisseur de vibrations torsionnelles selon l'une quelconque des revendications précédentes, **caractérisé en ce que** les parties d'amortissement (54, 70, 90, 118) sont prévues, de préférence exclusivement, entre les flancs de dents (102, 104) mutuellement associés de la denture intérieure et de la denture extérieure (58, 56).

15. Amortisseur de vibrations torsionnelles selon la revendication 14, **caractérisé en ce que** des renfoncements (106, 108) sont prévus dans les flancs de dents (102, 104), dans lesquels renfoncements la partie d'amortissement (90, 118) est en partie introduite.

16. Amortisseur de vibrations torsionnelles selon l'une quelconque des revendications précédentes, **caractérisé en ce que** la denture intérieure et la denture extérieure (58, 56) sont réalisées de telle sorte que la partie extérieure (52) puisse tourner depuis une position neutre dans laquelle les flancs de dents (102, 104) de la denture intérieure et de la denture extérieure (58, 56) ne sont pas immédiatement adjacents, dans une direction périphérique (72) par rapport à la partie intérieure (50) et avec déformation élastique des parties d'amortissement (118), dans une position de butée, dans laquelle au moins un flanc de dent (102) de la denture intérieure (58) est immédiatement adjacent à un flanc de dent (104) de la denture extérieure (104).

17. Amortisseur de vibrations torsionnelles selon la revendication 16, **caractérisé en ce que** les parties d'amortissement (118) sont disposées dans la position neutre avec précontrainte entre les flancs de dents mutuellement associés (102, 104) de la denture intérieure et de la denture extérieure (58, 56).

18. Amortisseur de vibrations torsionnelles selon l'une quelconque des revendications 16 ou 17, **caractérisé en ce que** la partie extérieure (52) peut tourner suivant un angle de déviation prédéterminé de la position neutre dans la position de butée, l'angle de déviation prédéterminé étant inférieur à un angle de déviation prédéterminé entre l'élément primaire (4, 62, 88, 110, 116, 120) et l'élément secondaire (8).
